# EUROPEAN PATENT SPECIFICATION

(11) **EP 2 163 581 B1**
(45) Date of publication and mention of the grant of the patent: **26.09.2012**
(21) Application number: 08777771.0
(22) Date of filing: 02.07.2008
(51) Int. Cl.: C08L 67/02, C08K 3/34, C08K 5/24, C08K 5/49

(54) **POLYESTER RESIN COMPOSITION FOR INJECTION MOLDING, LIGHT REFLECTOR BASE, AND LIGHT REFLECTOR**
POLYESTERHARZZUSAMMENSETZUNG ZUR INJEKTIONSFORMUNG, LICHTREFLEKTORBASIS UND LICHTREFLEKTOR
COMPOSITION DE RÉSINE POLYESTER POUR LE MOULAGE PAR INJECTION, BASE DE RÉFLECTEUR DE LUMIÈRE ET RÉFLECTEUR DE LUMIÈRE

(30) Priority: 02.07.2007 JP 2007174108
(43) Date of publication of application: 17.03.2010
(73) Proprietor: MITSUBISHI ENGINEERING-PLASTICS CORPORATION, Tokyo 105-0021 (JP)
(72) Inventor: HONMA, Ken, Hiratsuka-shi Kanagawa 254-0016 (JP); NAKANO, Hiroshi, Hiratsuka-shi Kanagawa 254-0016 (JP); WATARI, Tatsuya, Hiratsuka-shi Kanagawa 254-0016 (JP); TAKISE, Osamu, Hiratsuka-shi Kanagawa 254-0016 (JP); TSUNODA, Morio, Hiratsuka-shi Kanagawa 254-0016 (JP)
(74) Representative: Müller-Boré & Partner Patentanwälte
(86) International application number: PCT/JP2008/061968
(87) International publication number: WO 2009/005084

(56) References cited:
- JP-A- 03 185 069
- JP-A- 03 185 072
- JP-A- 04 506 382
- JP-A- 2000 281 886
- JP-A- 2002 053 748
- JP-A- 2003 183 491
- JP-A- 2003 183 491
- JP-A- 2005 171 183
- JP-A- 2006 052 128
- JP-A- 2006 225 439
- JP-A- 2007 138 160
- JP-A- 2007 161 840
- JP-A- 2007 161 978
- JP-A- 2008 150 598

## Description

### Technical Field

The present invention relates to a polyester resin composition for injection-molding preferably adaptable to light reflector base on the surface of which a light reflective layer will be provided; a light reflector molded using the composition; and a light reflector.

### Background Art

Light reflectors adoptable to housing, reflector and extension of automotive lamps, home lighting appliances and so forth are required to provide high apparent luminance, smoothness and uniform reflectivity in view of ensuring directionality of lamp light source, and excellent heat resistance durable against heat emitted from the light source. For this reason, the light reflectors having been conventionally adopted are those composed of metal (sheet metal), or those having a metal film formed by plating or vacuum evaporation of metal onto the surface of thermo-setting resin represented by bulk molding compound (BMC) and sheet molding compound (SMC).

The metal-made light reflectors have, however, been suffering from drawbacks of poor machinability, and poor handlability due to their heavy weight. In contrast, the light reflectors having a metal film formed on the surface of the light reflector base obtained by molding the thermo-setting resin have excellent characteristics including heat resistance, rigidity, dimensional stability and so forth. The light reflectors are, however, disadvantageous in that they need a long cycle of molding of the thermo-setting resin, and also in that they are suffering from production of flashes in the process of molding, or outgas due to vaporization of monomers used for the molding.

Investigations have, therefore, been made on light reflector bases using the thermoplastic resins, which are capable of solving these problems, adapting themselves to recent trends towards more sophisticated functions and more diversified designs of the light reflectors, and are excellent also in the productivity. For example, a recent mainstream of the light reflectors resides in those having a metal film provided to the surface of light reflector bases which are composed of thermoplastic resin compositions, obtained by injection-molding.

This sort of light reflector bases composed of the thermoplastic resin compositions are required to have excellent mechanical, electrical, and other physical/chemical characteristics, and desirable machinability. For this reason, the thermoplastic resin compositions having been used are such as those containing crystalline thermoplastic polyester resin, and in particular polybutylene terephthalate resin, or poly (ethylene terephthalate) resin mixed with other resin, as a major constituent, and containing also various reinforcing materials added thereto. The light reflectors herein have generally been manufactured by using light reflector bases obtained by molding thermoplastic resin compositions by injection-molding, by subjecting the surface to pretreatment (pre-coating) such as under-coating, and then by forming the metal film as the light reflective layer typically by vacuum evaporation.

The pre-coating such as under-coating, however, largely pushes up the cost, and also restricts the degree of freedom of design, so that it has been desired to obtain light reflectors having high apparent luminance without under-coating. In order to ensure high apparent luminance and uniform reflectivity of the reflectors having the light reflective layer on one surface of the light reflector bases without under-coating, it is now necessary for the light reflector bases to have desirable levels of surface smoothness, and high gloss and apparent luminance. Considering their applications and specifications, another critical issue reside in heat resistance of the source resins, and suppression of outgas (low gas emission performance) in the process of molding the resin compositions.

However, extensive polishing of the surface of molding mold used for injection-molding of the resin, aiming at achieving high apparent luminance, may make mold releasing difficult in the process of taking out the mold products (light reflector bases) in the injection-molding, so that the cycle of molding may adversely be affected, and thereby an irregular pattern due to unsmooth mold releasing may be more likely to appear on the surfaces of the mold products. This may result in lowering in the reflectivity. In order to prevent the moldability from being degraded, it may now be necessary to keep a desirable level of surface luminance, while improving the mold releasability.

As molding-related techniques aimed at obtaining the light reflector bases having high gloss and desirable surface properties, methods having generally been adopted include a method of improving fluidity of the resin compositions by elevating the temperature thereof in the process of molding, and a method of improving mold transferability by elevating mold temperature and thereby delaying the rate of solidification.

These methods may contribute to improve the appearance of the light reflector bases, but consequent elevation in temperatures of the resin compositions and the mold may make the outgas (volatile) more likely to produce. Since this sort of volatile may be causative of unacceptable appearances, such as fogging, on the surface of the light reflector base, so that it is made difficult to continuously obtain good light reflector bases, raising a need of additional measures of polishing and wiping of the mold. In addition, exposure of the mold to high temperatures may induce corrosion of the surfaces of the metal films, and thereby causing fogging of the light reflectors. According to the conventional technique, it was also a general practice to mold the light reflector bases without adding fillers, for the purpose of maintaining high apparent luminance of the surface of the metal films of light reflector. For this reason, also failure of mold releasing due to shrinkage of the resin compositions used for the light reflector bases, and degradation in the heat resistance have been problems to be solved.

On the other hand, there are known resin compositions disclosed in Patent Document 1 and Patent Document 2, composed of a polyester resin composition and an inorganic filler. The resin compositions are, however, limited in the surface gloss due to their large contents of inorganic filler, and are therefore not suitable for the resin compositions to be adopted to the light reflector bases. Patent Documents 3 to 5 disclose polyester resin compositions adopted to the light reflector bases. Patent documents 3 to5 fails to disclose or suggest using zirconium silicate in the polyester resin compositions.

Patent Document 1: Japanese Laid-Open Patent Publication No. H10-292101
Patent Document 2: Japanese Laid-Open Patent Publication No. H7-145265
Patent Document 3: Japanese Laid-Open Patent Publication No. 2006-225440
Patent Document 4: Japanese Laid-Open Patent Publication No. 2005-194300
Patent Document 5: Japanese Laid-Open Patent Publication No. 2006-299047

JP 2003-183491 discloses a reflective composition for a reflective plate, said composition containing an aromatic polycarbonate resin or a polyallyate resin both being classified as amorphous resins, and mandatorily comprising titanium dioxide.

### DISCLOSURE OF THE INVENTION

### Problems to be Solved by the Invention

The present invention is aimed at solving the above-described problems, wherein an object of the present invention is to provide a polyester resin composition which is excellent in mold releasability, and is capable of providing light reflectors which are excellent in apparent luminance and reflectivity, and suppressed in hazing even used under high temperatures; and in particular to provide a polyester resin composition to be molded by injection-molding.

### Means for Solving the Problems

The present inventors found out after our extensive investigations aimed at solving the above-described problems, that a resin composition obtained by adding zirconium silicate having an average primary particle size of 10 µm or smaller to a polyester resin is capable of solving the above-described problems, in particular when it is subjected to injection-molding. More particularly, the present inventors found out that the aforementioned problems may be solved by the means described below:
(1) A polyester resin composition for inj ection-molding comprising;
   (A) 100 parts by weight of a polyester resin which is a polyalkylene terephthalate; and
   (B) 0.1 to 20 parts by weight of zirconium silicate having an average primary particle size of 10 µm or smaller,
   (C) 0 to 5 parts by weight of a chelating agent capable of forming a chelate with mono to tetravalent metal ions.
(2) The polyester resin composition for injection molding as described in (1), further comprising 0.05 to 5 parts by weight, relative to 100 parts by weight of the resin, of a chelating agent capable of forming a chelate with mono- or tetra-valent metal ions.
(3) The polyester resin composition for injection-molding as described in (1), comprising a polybutylene terephthalate resin as the (A) polyester resin.
(4) The polyester resin composition for injection-molding as described in any one of (1) to (3), comprising a polyester resin having a terminal carboxyl group content of 50 eq/ton or less, as the (A) polyester resin.
(5) The polyester resin composition for injection-molding as described in any one of (1) to (4), wherein the (A) polyester resin comprises a polybutylene terephthalate resin and at least one species selected from polyester resins other than polybutylene terephthalate resin, in a weight ratio of 90/10 to 40/60.
(6) The polyester resin composition for injection-molding as described in any one of (1) to (5), comprising a polybutylene terephthalate resin and a poly(ethylene terephthalate) resin, as the (A) polyester resin.
(7) The polyester resin composition for injection-molding as described in any one of (1) to (6), comprising a polybutylene terephthalate resin having a terminal carboxyl group content of 50 eq/ton or less, as the (A) polyester resin.
(8) The polyester resin composition for injection-molding as described in any one of (1) to (7), wherein the (B) zirconium silicate has an average primary particle size of 5 µm or smaller.
(9) The polyester resin composition for injection-molding as described in any one of (1) to (8), comprising 0.1 to 15 parts by weight of the (B) zirconium silicate, per 100 parts by weight of the (A) polyester resin.
(10) The polyester resin composition for injection-molding as described in any one of (1) to (9), wherein the content of a fraction of the (B) zirconium silicate, having a particle size exceeding 5 times as large as the average primary particle size, is 2% by weight or less relative to the total content of zirconium silicate.
(11) The polyester resin composition for injection-molding as described in any one of (1) to (10), comprising at least one species selected from hydrazine derivatives and organo-phosphorus compounds, as the (C) chelating agent capable of forming a chelate with mono- to tetra-valent metal ions.
(12) The polyester resin composition for injection-molding as described in any one of (1) to (10), comprising at least one species selected from hydrazine derivatives, as the (C) chelating agent capable of forming a chelate with mono- to tetra-valent metal ions.
(13) The polyester resin composition for injection-molding as described in any one of (1) to (10), comprising at least one species selected from hydrazine derivatives having a molecular weight of 300 to 1000, as the (C) chelating agent capable of forming a chelate with mono-to tetra-valent metal ions.
(14) The polyester resin composition for injection-molding as described in any one of (1) to (13), comprising 0.05 to 1 parts by weight of the (C) chelating agent capable of forming a chelate with mono- to tetra-valent metal ions, per 100 parts by weight of the (A) polyester resin.
(15) A light reflector base formed from the polyester resin composition for injection-molding described in any one of (1) to (14).
(16) A light reflector having a light reflective layer on the light reflector base described in (15).
(17) The light reflector as described in (16), wherein the light reflective layer is a metal film, and the metal film is in contact with the surface of the light reflector base.

### Effect of the Invention

The light reflector base of the present invention is excellent in appearance of surface. Accordingly, the light reflector base can ensure thereon excellent deposition of metal when the metal film is provided thereon in the process of manufacturing a light reflector, and can thereby provide the light reflector excellent in reflectivity of light.

### Best Modes for Carrying out the Invention

The present invention will now be detailed below. Note that all numerical ranges expressed by using "to" in this patent specification are used for representing ranges which include the numerical values before and after "to" as the lower and upper limit values, respectively.

### (A) Polyester Resin

The aromatic polyester resins used in the present invention are poly (alkylene terephthalate) resins. The poly(alkylene terephthalate) resins herein mean resins containing alkylene terephthalate constitutional units, and may be copolymers of alkylene terephthalate constitutional units with other constitutional units.
The poly(alkylene terephthalate) resins adoptable to the present invention may be exemplified by poly(ethylene terephthalate) resin (PET), poly(propylene terephthalate) resin, poly(butylene terephthalate) resin (PBT), polyethylene naphthalate resin (PEN), poly(butylene naphthalate) resin (PBN), poly(cyclohexane 1,4-dimethylene-terephthalate) resin, and poly(trimethylene terephthalate) resin, wherein poly(butylene terephthalate) resin is preferable.
Other poly(alkylene terephthalate) resin adoptable to the present invention, besides those described in the above, may be exemplified by alkylene terephthalate copolymers having alkylene terephthalate constitutional units as the major constitutional units, and poly(alkylene terephthalate) mixtures having poly(alkylene terephthalate) as the major constituent. In addition, also those containing, or being copolimerized with an elastomer component such as poly(oxytetramethylene glycol)(PTMG) may be adoptable.

The alkylene terephthalate copolyesters may be exemplified by copolyesters which are composed of two or more species of diol components and terephthalic acid; and copolyesters which are composed of a diol component, terephthalic acid, and a dicarboxylic acid other than terephthalic acid. When two or more species of diol components are used, they may appropriately be selected from those described in the above, wherein the content of monomer unit to be copolymerized with the alkylene terephthalate, which is the main constitutional unit, is preferably adjusted to 25% by weight or less, in view of improving the heat resistance.

The examples include alkylene terephthalate copolyesters having alkylene terephthalate constitutional units, such as ethylene glycol/isophthalic acid/terephthalic acid copolymer (isophthalic acid-copolymerized poly(ethylene terephthalate)), and 1,4-butanediol/isophthalic acid/terephthalic acid copolymer (isophthalic acid-copolymerized poly(butylene terephthalate)), as the major constitutional unit; and 1,4-butanediol/isophthalic acid/decane dicarboxylic acid copolymer. Among them, alkylene terephthalate copolyesters are preferable.

For the case where the alkylene terephthalate copolyesters are used as the (A) polyester resin in the present invention, preferable examples of the (A) polyester resin include the above-described isophthalic acid-copolymerized poly(butylene terephthalate), and isophthalic acid-copolymerized polyethylene terephthalate. Particularly preferable examples among them include those having the content of the isophthalic acid component of 25% by weight or less, in view of improving the heat resistance.

The polyalkylene terephthalate resin mixtures may be exemplified by mixtures of PBT with a poly(alkylene terephthalate) resin other than PBT, and mixtures of PBT with an alkylene terephthalate copolyester other than PBT. Among them, preferable examples include mixtures of PBT with PET, mixtures of PBT with poly(trimethylene terephthalate), and mixtures of PBT and PBT/poly(alkylene isophthalate).

Preferable examples of the aromatic polyester resins, adopted as the (A) polyester resin in the present invention, include so-called poly(alkylene terephthalate) resin, which contain terephthalic acid as the aromatic dicarboxylic acid component, and mixtures thereof. Preferable examples of the poly(alkylene terephthalate) resin include PBT, PBT/PET copolymer, copolymer obtained by copolymerizing PBT with isophthalic acid, PBT/PTMG copolymer elastomer, and PET. Among them, the alkylene terephthalate resins having PBT as the major constitutional unit and copolyesters thereof are preferable, and PBT, and mixtures of PBT with a polyester resin other than PBT are particularly preferable.

In the present invention, the (A) polyester resin is preferably composed of poly(butylene terephthalate) resin and at least one species of polyester resin selected from those other than poly(butylene terephthalate) resin (more preferably, poly(ethylene terephthalate) resin), in a weight ratio from 100/0 to 40/60, more preferably from 90/10 to 40/60, and still more preferably from 90/10 to 30/70. By adjusting the weight ratio to the above-described ranges, the appearance may successfully be improved, and the shrinkage may successfully be reduced.

The number-average molecular weight (Mn) of the (A) polyester resin is not specifically limited, and may appropriately be selected and determined. The number-average molecular weight generally falls in the range from 1×10⁴ to 100×10⁴, preferably from 3×10⁴ to 70×10⁴, and more preferably from 5×10⁴ to 50×10⁴.

The intrinsic viscosity [η] of the (A) polyester resin adoptable to the present invention generally falls in the range from 0.5 to 2 dl/g, preferably from 0.6 to 1.5 dl/g, and more preferably from 0.6 dl/g to 1.2 dl/g. The intrinsic viscosity herein means a viscosity measured by dissolving a sample in an 1:1 (ratio by weight) mixed solution of phenol and 1,1,2,2-tetrachloroethane, using an Ubbelohde viscometer at 30°C.

For the case where poly(alkylene terephthalate) or copolyester thereof is used as the (A) polyester resin in the present invention, the intrinsic viscosity [η] is preferably 0.5 to 1.5, and more preferably 0.6 to 1.3.

For the case where PBT is used as the (A) polyester resin, the intrinsic viscosity of PBT is preferably 0.6 to 1.4, meanwhile for the case where PET is used, the intrinsic viscosity of PET is preferably 0.6 to 1.0. The intrinsic viscosity adjusted to 0.6 or larger raises a preferable tendency of improving the mechanical strength, and that adjusted to 1.4 or smaller raises a tendency of allowing the surface of the mold product to exhibit a high apparent luminance as a light reflector, without excessively lowering the fluidity in the process of melt molding.

The terminal carboxyl group content of the poly (alkylene terephthalate) used in the present invention may appropriately be selected and determined, wherein that of PBT is generally 60 eq/ton or less, preferably 50 eq/ton or less, and more preferably 30 eq/ton. By adjusting the content to 50 eq/ton or less, the outgassing in the process of melt molding of the resin composition of the present invention may be less likely to occur. The lower limit of the terminal carboxyl group content is not specifically limited, but may generally be adjusted to 10 eq/ton or more, taking productivity of the polyester resin in manufacturing into consideration.

The terminal carboxyl group concentration of the (A) polyester resin in the present invention is defined by a value obtained by dissolving 0.5 g of poly (alkylene terephthalate) into 25 mL of benzyl alcohol, and by titrating the solution using a 0.01 mol/L benzyl alcohol solution of sodium hydroxide. The terminal carboxyl group concentration may be adjustable by any publicly-known arbitrary method, such as a method of adjusting polymerization conditions which include ratio of charge of source materials for polymerization, polymerization temperature, a method of reducing pressure and so forth; and a method of allowing an end blocker to react.

Methods of manufacturing the (A) polyester resin used for the present invention may be arbitrary, allowing arbitrary selection from those publicly known. Referring now to an exemplary case of poly(butylene terephthalate) composed of a terephthalic acid component and an 1,4-butanediol component, the methods may be roughly classified into direct polymerization method which allows terephthalic acid and 1,4-butanediol to cause direct esterification, and ester exchange method which uses dimethyl terephthalate as a major source material.

Difference between both methods is that the former produces water in the initial esterification, and the latter produces alcohol in the initial ester exchange reaction. The direct esterification is advantegeous in terms of cost of source materials. Methods of manufacturing polyester may alternatively be classified roughly into batch method and continuous method, based on the modes of supply of the source materials and discharge of the polymer.

The methods may still alternatively be exemplified by a method of allowing the initial esterification (or ester exchange) reaction to proceed by continuous operation, followed by polycondensation based on batch operation; and a method of allowing the initial esterification (or ester exchange) reaction to proceed by batch operation, followed by polycondenstaion based on continuous operation.

A method of measuring the weight-average molecular weight in the present invention is GPC (Gel Permeation Chromatography), and a method of measuring the acid value is potentiometric titration (ASTM D 1386) using a 0.5 mol KOH solution in ethanol.

### (B) Zirconium Silicate

The polyester resin composition of the present invention contains zirconium silicate (ZrO₂·SiO₂) having an average primary particle size of 10 µm or smaller.
Zirconium silicate may be commercially available typically from Kinseimatec Co., Ltd. under the trade name of Zircon Flour A-PAX. Zirconium silicate has the true specific gravity preferably in the range from 4.2 to 4.8, and more preferably in the range from 4.5 to 4.8; has a preferable hardness of 7.5; has a preferable compositional ratio of ZrO₂ of 63.5 to 68% by weight, SiO₂ of 31.5 to 36% by weight, Fe₂O₃ of less than 0. 3% by weight, and Al₂O₃ of less than 3% by weight. From the viewpoint of retention thermal stability of the composition, the polyester resin more preferably has a compositional ratio of ZrO₂ of 64 to 67% by weight, SiO₂ of 32 to 35% by weight, Fe₂O₃ of less than 0.2% by weight, and Al₂O₃ of less than 2.5% by weight; and particularly preferably has a compositional ratio of ZrO₂ of 64 to 67% by weight, SiO₂ of 32 to 34% by weight, Fe₂O₃ of less than 10% by weight, and Al₂O₃ of less than 2.0% by weight.
The average primary particle size of zirconium silicate in the present invention is preferably 5 µm or smaller, and more preferably 2 µm or smaller. Adoption of zirconium silicate having an average primary particle size of 2 µm or smaller desirably raises a tendency of improving the appearance of the resultant light reflector. The lower limit value of the average primary particle size is preferably 1 µm or larger, although not specifically limited, without departing from the gist of the present invention.
Zirconium silicate preferably has a content of a fraction, having a particle size exceeding 5 times as large as the average primary particle size, of 2% by weight or less, and preferably 1% by weight or less, relative to the total content of zirconium silicate in the polyester resin composition.
The average particle size of zirconium silicate in the present invention herein means a particle size at which a cumulative weight distribution of 50% is achieved in the particle size distribution obtained by measurement using SediGraph (X-ray transmission particle size analyzer). SediGraph is an apparatus for measuring particle size distribution, by irradiating X-ray to a suspended solution in the process of sedimentation, based on energy of transmitted X-ray.

Zirconium silicate in the present invention may be subjected to surface treatment with a silane coupling agent. The silane coupling agent may be exemplified by those of aminosilane base, epoxy silane base, allylsilane base, vinylsilane base and so forth. Among them, those of aminosilane base are preferable. Among the aminosilane-base coupling agent, γ-aminopropyltriethoxysilane,
γ-aminopropyltrimethoxysinale, and
γ-(2-aminoethyl)aminopropyltrimethoxysilane may be enumerated as the preferable examples. The content of the silane coupling agent in the surface treatment agent is preferably 0.1 to 8% by weight, and more preferably 0.5 to 5% by weight.

The surface treatment agent used for zirconium silicate may contain components other than the above-described silane coupling agent, such as epoxy resin, urethane resin, acryl resin, antistatic agent, lubricant and water repellent, without departing from the gist of the present invention. As for methods of surface treatment using the surface treatment agent, zirconium silicate may preliminarily be treated on the surface thereof using the surface treatment agents, such as disclosed in Japanese Laid-Open Patent Publication Nos. 2001-172055, S53-106749 and so forth; or the surface treatment agent may be added independently from the untreated zirconium silicate, in the process of preparing the polyester resin composition of the present invention.

As for ratio of mixing of the (A) polyester resin and zirconium silicate in the present invention, the (B) zirconium silicate is contained in an amount of 0.1 to 20 parts by weight, preferably 0.1 to 15 parts by weight, more preferably 0.5 to 10 parts by weight, and still more preferably 1 to 7 parts by weight, per 100 parts by weight of the polyester resin. By adjusting the ratio in these ranges, the polyester resin composition which is generally excellent in appearance, mechanical strength and toughness may be obtained.

### (C) Chelating Agent

The polyester resin composition of the present invention preferably contains a chelating agent capable of forming a chelate with a mono- to tetra-valent metal ion (simply referred to as "chelating agent", hereinafter on occasions). By adding the chelating agent in the present invention, catalytic actions exerted on the ester exchange reaction, by ions containing any of metals such as sodium, potassium, magnesium, calcium, zinc, copper, nickel, iron, zirconium, hafnium, titanium and so forth, may be suppressed, and thereby the decomposition outgassing may further be suppressed.
The chelating agent may be exemplified by hydrazine derivatives, and organo-phosphorus compounds, wherein the hydrazine derivatives are more preferable. By adopting the hydrazine derivatives, the amount of outgas may further be reduced by virtue of formation of complexes with ions which contain metals, and thereby the resultant resin composition may particularly be made excellent in properties for fogging performance and fouling performance to molds.

### Hydrazine Derivative

As the hydrazine derivatives used in the present invention, those publicly known may arbitrarily be adoptable. More specifically, they may be exemplified by decamethylenecarboxylic acid disalicyloyl hydrazide, 2',3-[[3-(3,5-di-*t*-butyl-4-hydroxyphenyl)propionyl]] propionohydrazide, isophthalic acid bis(2-phenoxypropionylhydrazide), N-formyl-N'-salicyloyl hydrazine, and oxalyl-bis-benzylidene-hydrazide. Among them, dihydrazides such as decamethylenecarboxylic acid disalicyloyl hydrazide, and 2',3-[[3-(3,5-di-*t*-butyl-4-hydroxyphenyl)propionyl]] propionohydrazide, are preferable.
Too small molecular weight of the hydrazine derivatives used in the present invention may undesirably degrade property for fogging performance. On the contrary, too large molecular weight may degrade the chelate-forming performance, and may again degrade property for fogging performance. Accordingly, the molecular weight is preferably 300 to 1000, more preferably 400 to 800, and particularly preferably 450 to 600.

### Organo-Phosphorus Compound

As the organo-phosphorus compound used in the present invention, those publicly known may arbitrarily be adoptable. More specifically, organic phosphate compounds, organic phosphite compounds, organic phosphonite compounds and so forth may be adoptable. Among them, in view of suppressing ester exchange reaction possibly occurs when a plurality of species of resin are used as the (A) polyester resin, the organic phosphite compounds and organic phosphate compounds are preferable.

The organic phosphite compounds may be exemplified by triphenyl phosphite, diphenyldecyl phosphite, phenyl diisodecyl phosphite, tri(nonylphenyl) phosphite, bis(2,4-di-*t*-butylphenyl)pentaerythritol diphosphite, and bis(2,6-di-*t*-butyl-4-methylphenyl)pentaerythritol diphosphite (from ADEKA Corporation, PEP-36). Among them, bis(2,6-di-*t*-butyl-4-methylphenyl) pentaerythritol diphosphite is preferable.
As the organic phosphate compounds, dialkyl acid phosphate compound represented by the formula below is particularly preferable.

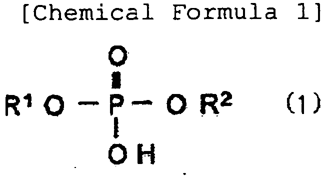

(In the formula, each of R¹ and R² independently represents a hydrogen atom and alkyl group having 1 to 30 carbon atoms.)

The alkyl group having 1 to 30 carbon atoms is preferably an alkyl group having 1 to 10 carbon atoms, and particularly preferably an alkyl group having 1 to 5 carbon atoms.
The phosphorus-containing chelating agent may be exemplified by oxyethyl acid phosphate, pentaerythritol diphosphite, stearic acid phosphate, sodium hypophosphite, phosphorous acid, and phosphoric acid.
In particular, those having high melting points, and not decomposable per se may be preferable. More specifically, oxyethyl acid phosphate, pentaerythritol diphosphite, sodium hypophosphite may be exemplified. They are preferable in terms of improvement in property for fogging performance, and appearance of light reflectors after annealing, wherein oxyethyl acid phosphate, and sodium hypophosphite are particularly preferable by virtue of their large chelating effect.

The content of the (C) chelating agent in the present invention is 0 to 5 parts by weight, preferably 0.05 to 1 parts by weight, and more preferably 0.1 to 0.7 parts by weight, per 100 parts by weight of the (A) polyester resin. In particular, for the case where hydrazine derivatives are used as the (C) chelating agent, the content is preferably 0.05 to 0.4 parts by weight, per 100 parts by weight of the (A) polyester resin.

### <Other Additives>

The polyester resin composition of the present invention may be added with other additives, without departing from the gist of the present invention. Other additives may be exemplified by antioxidant, flame retarder, heat stabilizer, lubricant, mold releasing agent, catalyst deactivator, and crystal nucleation agent. These additives may be added during, or after polymerization of the polyester resin. For the purpose of imparting desired functions, the polyester resin may further be added with UV absorber, weather-proofing stabilizer, anti-static agent, foaming agent, plasticizer, impact resistance modifier, and inorganic filler other than zirconium silicate.

The antioxidant raises effects of further efficiently improving the anti-heat aging performance of the polyester resin composition of the present invention, and of further improving rates of maintaining color tone, tensile strength, elasticity and so forth. As the antioxidant, at least a single species selected from phenolic antioxidants, sulfur-containing antioxidants, and phosphorus-containing antioxidants is preferably added.
The total amount of addition of antioxidant is preferably 0.001 to 2 parts by weight, and more preferably 0.03 to 1.5 parts by weight, per 100 parts by weight of the polyester resin.

The flame retarder is not specifically limited, and may be exemplified by organic halogen compound, antimony compound, phosphorus compound, other organic flame retarders, and other inorganic flame retarders. The organic halogen compound may be exemplified by brominated polycarbonate, brominated epoxy resin, brominated phenoxy resin, brominated polyphenylene ether resin, brominated polystyrene resin, brominated bisphenol A, and pentabromobenzyl polyacrylate. The antimony compound may be exemplified by antimony trioxide, antimony pentaoxide, and sodium antimonate. The phosphorus compound may be exemplified by phosphate ester, polyphosphoric acid, ammonium polyphosphate, and red phosphorus. Other organic flame retarders may be exemplified by nitrogen-containing compounds such as melamine, cyanuric acid and so forth. Other inorganic flame retarders may be exemplified by aluminum hydroxide, magnesium hydroxide, silicon compound, and boron compound.
The amount of addition of these flame retarders is preferably 0.1 to 50 parts by weight, and more preferably 1 to 30 parts by weight, per 100 parts by weight of the polyester resin. By adjusting the amount of addition of the flame retarder to 0.1 parts by weight or more, the flame retardation performance may more effectively be expressed. By adjusting the amount of addition to 50 parts by weight or less, the physical properties, in particular mechanical strength, may be kept at a higher level.

The mold releasing agent may be exemplified by wax and so forth. For example, those described in Japanese Laid-Open Patent Publication Nos. 2005-146103 and 2002-105295 may be adoptable. In particular, modified polyolefins such as oxidized polyolefin and acid-modified polyolefin are preferable as the wax adoptable to the present invention.
The acid value of the modified polyolefins may be arbitrary, wherein it is preferably larger than 1 mg KOH/g and smaller than 10 mg KOH/g, more preferably 2 to 9 mg KOH/g, still more preferably 2 to 8 mg KOH/g, and particularly preferably 3 to 8 mg KOH/g. Oxidized polyethylene wax is preferable as the modified polyolefins used for the present invention, by virtue of its small amount of volatile when used for the light reflector base, and also by virtue of its large effect of improving the mold releasability.
As the modified polyolefins used for the present invention, those having an acid value of 1 mg KOH/g or smaller (including unmodified polyolefin resin), or having an acid value of 10 mg KOH/g or larger, may be used in combination. For the case where a plurality of species of modified polyolefins are used in the present invention, it may be sufficient enough to adjust the acid value of the modified polyolefins as a whole to exceed 1 mg KOH/g and to fall short of 10 mg KOH/g.
The weight-average molecular weight of the modified polyolefins used for the present invention is preferably 2,000 or larger. The molecular weight of smaller than 2,000 may be causative of an extremely large amount of volatiles, and may thereby fog the surface of the mold products. The upper limit value is not specifically limited, wherein too large weight-average molecular weight may raise a tendency of degrading the dispersibility, surface quality of the mold products, and mold releasability. It is, therefore, preferable to adjust the molecular weight generally to 500, 000 or smaller, particularly 300, 000 or smaller, more particularly 100, 000 or smaller, still more particularly 30, 000 or smaller, and further particularly 10,000 or smaller.
As the modified polyolefins used for the present invention, two or more species of modified polyolefins may be used at an arbitrary ratio. In this case, a modified polyolefin having a weight-average molecular weight of smaller than 2,000 may be combined, so far as the overall value of all species used herein may be assumed as 2,000 or larger.
The amount of addition of the mold releasing agent used in the present invention is 0.05 to 2 parts by weight, preferably 0.05 to 1 parts by weight, and more preferably 0.1 to 0.5 parts by weight, per 100 parts by weight of polyester resin.

The polyester resin composition of the present invention may be added, as a part of the polyester resin, with thermoplastic resins other than polyester resin, such as polyethylene resin, polypropylene resin, polystyrene resin, polyacrylonitrile resin, polymathacrylate ester resin, acrylonitrile/butadiene/styrene resin (ABS resin), polycarbonate resin, polyamide resin, polyphenylene sulfide resin, polyacetal resin, polyphenylene oxide resin; and thermosetting resins such as phenol resin, melamine resin, silicone resin, and epoxy resin, so far as the effects of the present invention will not be impaired. Two or more species of these thermoplastic resins and thermosetting resins may be used in combination.
The amount of addition of these resins is preferably 50% by weight or less, and more preferably 45% by weight or less of the polyester resin composition.

Methods of mixing of the various additives and resins described in the above are not specifically limited, wherein methods of using a single- or double-screw extruder having a vent allowing devolatizing therethrough as a kneader are preferable. The individual components, including additional components, may be fed to the kneader in a collective or sequential manner. Alternatively, two or more species selected from the individual components, including the additional components, may preliminarily be mixed or kneaded.

The light reflector of the present invention is those having an light reflective layer on a light reflector base which is composed of the polyester resin composition obtained by the method described in the above, and is preferably those having the light reflective layer on the surface of the light reflector base. As the method of molding of the polyester resin composition of the present invention, injection-molding is preferable, from the viewpoints of raising distinctive effects of the present invention, such as ensuring productivity, and good surface quality of the resultant light reflector base. Besides ordinary injection-molding, arbitrary publicly-known methods of molding may be exemplified by gas-assisted injection-molding, hollow molding, and compression molding.

The light reflective layer is generally a metal film typically formed by vacuum evaporation of metal, and is formed on the surface of the light reflector base. Methods of vacuum evaporation of metal are not specifically limited, and arbitrary publicly-known methods are adaptable. For example, a method described below may be adoptable.

A light reflector base is placed in an evaporation apparatus kept *in vacuo*, an inert gas such as argon is introduced therein together with oxygen, and the surface of the light reflector base is subjected to plasma-assisted activation. Next, an electrode having a target mounted thereon is supplied with current, and particles (aluminum particles, for example) sputtered out by a plasma generated in a chamber by induction discharge are allowed to adhere to the light reflector base. A protective film may optionally be formed on the surface of the aluminum vacuum-evaporated film, by plasma-assisted polymerization of a silicon-containing gas, or by ion plating of silicon oxide.

The light reflector base of the present invention is particularly effective for the case where the metal film is provided directly onto the surface thereof, without forming an undercoat. In short, the light reflector base of the present invention is excellent in the surface quality, so that a desirable adhesiveness with the metal film may be expressed even if metal is deposited by vacuum evaporation without preliminarily providing primer treatment to the surface thereof, and thereby desirable glossy surface may be obtained. In addition, the mold releasability of the light reflector base from the molds is excellent, so that irregular pattern of the mold is suppressed.

Metals adoptable to the metal film may be exemplified by chromium, nickel, and aluminum, wherein aluminum is preferable. The surface of the light reflector base may be cleaned and degreased before the vacuum evaporation, in order to improve adhesiveness of the surface of the light reflector base to the metal film.

The light reflector of the present invention may particularly preferably adoptable to housing, reflector and extension of automotive lamps.

### Examples

The present invention will further be detailed below referring to Examples. Note that materials, amount of use, ratio, details of processes, procedures of processes and so forth described in Examples below may appropriately be modified, without departing from the gist of the present invention. The scope of the present invention is, therefore, by no means limited to the specific examples described below.

The components listed below were used in Examples and Comparative Examples.

### [Resin Components]

(1) Poly(butylene terephthalate)(PBT): from Mitsubishi Engineering-Plastics Corporation (MEP), Novaduran 5008, η=0.85, terminal carboxyl group content=20 eq/ton, Mn=20, 000;
(2) Poly(butylene terephthalate)/isophthalate copolymer (IPA-copolymerized PBT): from MEP, Novaduran 5605, η=0.85, terminal carboxyl group content=20 eq/ton;
(3) Poly(ethylene terephthalate) (PET): from Mitsubishi Chemical Corporation, GS385, η=0.65;
(4) Poly(trimethylene terephthalate) (PTT): from Shell Chemicals, Corterra 9200, η=0.92;

### [Inorganic Fillers]

(5) Zirconium silicate: from Kinsei Matec Co., Ltd., trade name: A-PAX/45M, average primary particle size=1.05 µm, containing 0.3% by weight of fraction having a primary particle size exceeding 5.25 µm;
(6) Zirconium silicate: from Kinsei Matec Co., Ltd., trade name: Zircon Flour #600, average particle size=5 µm, containing 0.5% by weight of fraction having a primary particle size exceeding 25 µm;
(7) Talc: from Hayashi-Kasei Co., Ltd., trade name: Talcan powder PKC, average particle size=11.0 µm;
(8) Talc: from Hayashi-Kasei Co., Ltd., trade name: Micron White 5000S, average particle size=2.8 µm;
(9) Kaolin: from Engelhard Corporation, trade name: ASP-170, average particle size=0.8 µm;
(10) Calcined kaolin: from Engelhard Corporation, trade name: Ultrex 98, average particle size=2.3 µm; and
(11) Barium sulfate: from Sakai Chemical Industry Co., Ltd., trade name: B-55, average particle size=0.6 µm.

### [Chelating Agents or Substitutes]

(12) Hydrazine derivative (decamethylene carboxylic acid disalicyloyl hydrazide) : from ADEKA Corporation, trade name: CDA-6, molecular weight=498;
(13) Hydrazine derivative (2',3-[[3-[3,5-di-*tert*-butyl-4-hydroxyphenyl] propionyl]]propionohydrazide): from CIBA Specialty Chemicals, Inc., trade name: Irganox MD1024, molecular weight=553;
(14) Sodium hypophosphite: from Junsei Chemical Co., Ltd.;
(15) Oxyethyl acid phosphate: Johoku Chemical Co., Ltd., trade name: JP-502;
(16) Pentaerythritol diphosphite: from ADEKA Corporation, trade name: PEP-36;
(17) Stearic acid phosphate: from ADEKA Corporation, trade name: AX-71;
(18) Phosphorous acid: from Junsei Chemical Co., Ltd.; and
(19) Phosphoric acid: from Junsei Chemical Co., Ltd.

### [Other Additive]

(20) Oxidized polyethylene wax: from Clariant, Licowax, molecular weight=5500, acid value=3 to 5 mg KOH/g.

### [Examples and Comparative Examples]

The resin components, inorganic fillers, chelating agent or substitutes, and other additive were mixed according to each of compositions listed in Table 1, and thoroughly mixed in a dry process, and the mixture was pelletized using a double-screw extruder set at 250°C, and an extrusion speed of 15 Kg/hour.

Thus obtained pellets were dried at 120°C for 6 hours before injection-molding, and molded using an injection-molding machine having a clamping force of 75 ton, at a molding temperature of 265°C, using mirror-surface molds for producing a 100 mm×100 mm×3 mm product, at a mold temperature of 110°C, to thereby obtain light reflector bases. Mold releasability in the process of injection-molding was found to be good, enough to allow smooth release of the mold products without resistance.

The surface of the obtained light reflector bases, without primer treatment, was subjected to vacuum evaporation of aluminum so as to achieve a thickness of 140 nm, to thereby obtain light reflectors. Also an ISO test pieces were molded using the above-described pellets and using the injection-molding machine, at a molding temperature of 265°C, and a mold temperature of 80°C.

### [Methods of Test and Evaluation]

### Appearance of Light Reflectors

The light reflectors subjected to vacuum deposition of aluminum were visually observed, and evaluated according to criteria A to D listed below. The light reflectors were also dried under two types of conditions at 160°C for 24 hours, and at 180°C for 24 hours, in a hot air drying oven (from Yamato Scientific Co., Ltd., forced convection constant temperature oven DN-43), and then visually observed similarly to as described in the above.

A: High apparent luminance, no fogging, clear presentation of reflected image, and no fogging even after annealing;
B: High apparent luminance, but slightly fuzzy reflected image, and slight fogging after annealing due to gas;
C: High apparent luminance, but fuzzy reflected image, and fogging after annealing due to gas; and
D: No apparent luminance, and reflected image not recognizable irrespective of annealing.

### Reflectivity after Annealing

The above-described samples having aluminum deposited thereon were heated in a hot air drying oven at 180°C for 24 hours, and then subjected to measurement of reflectivity using a spectrocolorimeter (from Konica Minolta Holdings, Inc., CM-3600d). Results are expressed in %.

### Specific Gravity

Specific gravity was measured using ISO test pieces for tensile test, and using an electronic densimeter (from Shimadzu Corporation, trade name: AW320-SGM).

### Tensile Strength and Tensile Elongation

Conforming to ISO 527, tensile strength and tensile elongation were measured using ISO test pieces for tensile test, and using a tensile tester (from Toyo Seiki Seisaku-Sho, Ltd., trade name; Strograph APII). The test pieces used herein were prepared by allowing the resin composition pellets of the individual Examples and Comparative Examples to stand and dry in a hot air drying oven set to 120°C for 6 hours or longer, and then by throwing them into a hopper of an injection-molding machine (from Sumitomo Heavy Industries, Ltd., Model: SG75 SYCAP-MIII) at a cylinder temperature of 250°C, a mold temperature of 80°C, and a molding cycle of 40 seconds.
The unit in the Table below is MPa.

### Molding Shrinkage

Using an injection-molding machine (from Sumitomo Heavy Industries, Ltd., SH100) and under conditions including a cylinder temperature of 250°C and a mold temperature of 80°C, 100 mm (L)×100 mm (W)×2 mm (T) square plates were molded in a film gate mold, and molding shrinkage in the direction normal to the flow (TD) was measured.

### Anti-Fogging Performance

The mold products were crushed approximately to a size of pellets, 10 g of the crushed products were placed in test tubes (ϕ20×160 mm), and set in a fogging tester (from GL Sciences Inc., middle-sized thermostat chamber L-75, modified) conditioned at 180°C. Lids made of a heat-resistant glass (Tempax glass, ϕ25×2 mm thick) were placed on the test tubes, portions of the heat-resistance glass were kept in an atmosphere conditioned at a temperature of 25°C, and annealing was carried out at 180°C for 20 hours. After the annealing, attachment ascribable to decomposition products or the like of the resin composition sublimed therefrom was found to deposit on the inner surface of the glass lids. After the annealing, appearance of the attachment on the heat-resistant glass plates was visually observed, and evaluated according to 4-step criteria below:
A: Almost no adhesion on glass plate and fogging, transmitted image clearly recognizable by visual observation;
B: Slight adhesion on glass plate and fogging, transmitted image almost recognizable by visual observation, with slight fuzziness;
C: Adhesion on glass plate and fogging, transmitted image partially recognizable with fuzziness; and
D: Heavy adhesion on glass plate and fogging, transmitted image not recognizable.

### Evaluation of Anti-Fouling Performance (Mold Deposit (MD))

Using a molding machine (from Sumitomo Heavy Industries, Ltd., Minimat M8/7A) and a droplet-shape mold, 1000-shot continuous molding was carried out at a molding temperature of 270°C and a mold temperature of 35°C. After the molding, appearance of the attachment on the mold was visually observed, and evaluated according to 4-step criteria below:
A: Mold attachment hardly observed;
B: Mold attachment slightly observed;
C: Considerable mold attachment; and
D: Much mold attachment.

Results of the test and evaluation were shown in the Table below, with the amounts of the individual components expressed in parts by weight.

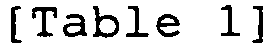

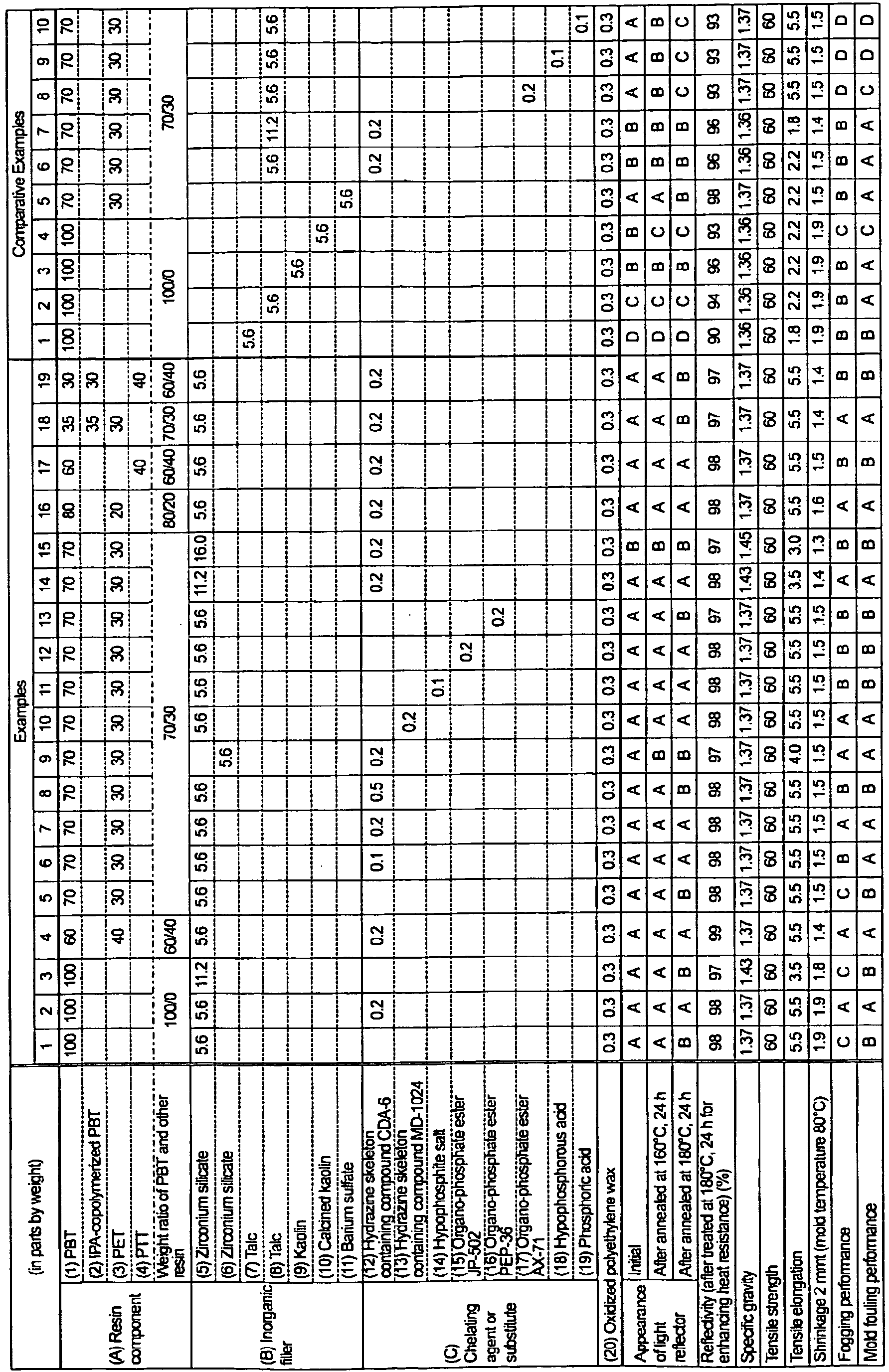

As is clear from the table in the above, it was found that, by manufacturing the light reflector base using the polyester resin composition of the present invention, the resultant light reflector may be excellent in appearance, and may be excellent generally in reflectivity and results of tensile test. It was also found that, those particularly excellent in anti-fogging performance and anti-fouling performance to molds may be obtained, by using the hydrazine derivative as the chelating agent.

### Industrial Applicability

By using the polyester resin composition of the present invention, mold releasability may be improved, and outgas is suppressed in the process of molding the composition into the light reflector base by injection-molding, so that the resultant light reflector base may have an excellent surface quality. The light reflector base of the present invention allows, on the surface thereof, direct provision of the light reflective layer such as a metal film, without providing any under layer. The light reflector base may maintain high apparent luminance even if exposed to a high temperature atmosphere. The light reflector of the present invention may successfully be suppressed from being degraded in these characteristics even under high temperature environments, and may consequently be applicable to a wide range of applications which include housing, reflector and extension of automotive lamps, home lighting appliances and so forth.

## Claims

1. A polyester resin composition for injection-molding comprising;
(A) 100 parts by weight of a polyester resin, which is a polyalkylene terephthalate
(B) 0.1 to 20 parts by weight of zirconium silicate having an average primary particle size of 10 µm or smaller, and
(C) 0 to 5 parts by weight of a chelating agent capable of forming a chelate with mono- to tetra-valent metal ions.

2. The polyester resin composition for injection-molding as described in claim 1, further comprising 0.05 to 5 parts by weight, relative to 100 parts by weight of the resin, of a chelating agent capable of forming a chelate with mono- to tetra-valent metal ions.

3. The polyester resin composition for injection-molding as described in Claim 1 or 2, comprising a polybutylene terephthalate resin as the (A) polyester resin.

4. The polyester resin composition for injection-molding as described in Claim 1, wherein the (A) polyester resin comprises a polybutylene terephthalate resin and at least one species selected from polyester resins other than polybutylene terephthalate resin, in a weight ratio of 90/10 to 40/60.

5. The polyester resin composition for injection-molding as described in Claims 1 to 4, comprising a polybutylene terephthalate resin and a poly(ethylene terephthalate) resin, as the (A) polyester resin.

6. The polyester resin composition for injection-molding as described in any one of Claims 1 to 5, wherein the (B) zirconium silicate has an average primary particle size of 5 µm or smaller.

7. The polyester resin composition for injection-molding as described in Claims 1 to 6, comprising 0.1 to 15 parts by weight of the (B) zirconium silicate, per 100 parts by weight of the (A) polyester resin.

8. The polyester resin composition for injection-molding as described in any one of Claims 1 to 7, wherein the content of a fraction of the (B) zirconium silicate, having a particle size exceeding 5 times as large as the average primary particle size, is 2% by weight or less relative to the total content of zirconium silicate.

9. The polyester resin composition for injection-molding as described in Claims 1 to 8, comprising at least one species selected from hydrazine derivatives and organo-phosphorus compounds, as the (C) chelating agent capable of forming a chelate with mono- to tetra-valent metal ions.

10. The polyester resin composition for injection-molding as described in any one of Claims 1 to 8, comprising at least one species selected from hydrazine derivatives, as the (C) chelating agent capable of forming a chelate with mono- to tetra-valent metal ions.

11. The polyester resin composition for injection-molding as described in Claims 1 to 8, comprising at least one species selected from hydrazine derivatives having a molecular weight of 300 to 1000, as the (C) chelating agent capable of forming a chelate with mono- to tetra-valent metal ions.

12. The polyester resin composition for injection-molding as described in any one of Claims 1 to 11, comprising 0.05 to 1 parts by weight of the (C) chelating agent capable of forming a chelate with mono- to tetra-valent metal ions, per 100 parts by weight of the (A) polyester resin.

13. A light reflector base formed from the polyester resin composition for injection-molding described in any one of Claims 1 to 12.

14. A light reflector having a light reflective layer on the light reflector base described in Claim 13.

15. The light reflector as described in Claim 14, wherein the light reflective layer is a metal film, and the metal film is in contact with the surface of the light reflector base.

## Patentansprüche

1. Polyesterharzzusammensetzung zum Spritzgießen, umfassend
(A) 100 Gewichtsteile eines Polyesterharzes, welches ein Polyalkylenterephthalat ist,
(B) 0,1 bis 20 Gewichtsteile Zirkoniumsilikat mit einer durchschnittlichen primären Teilchengröße von 10 µm oder kleiner, und
(C) 0 bis 5 Gewichtsteile eines Chelatisierungsmittels, welches befähigt ist, ein Chelat mit ein- bis vierwertigen Metallionen zu bilden.

2. Polyesterharzzusammensetzung zum Spritzgießen, wie in Anspruch 1 beschrieben, weiter umfassend 0,05 bis 5 Gewichtsteile, bezogen auf 100 Gewichtsteile des Harzes, eines Chelatisierungsmittels, welches befähigt ist, ein Chelat mit ein- bis vierwertigen Metallionen zu bilden.

3. Polyesterharzzusammensetzung zum Spritzgießen, wie in Anspruch 1 oder 2 beschrieben, umfassend ein Polybutylenterephthalatharz als das Polyesterharz (A).

4. Polyesterharzzusammensetzung zum Spritzgießen, wie in Anspruch 1 beschrieben, wobei das Polyesterharz (A) ein Polybutylenterephthalatharz und mindestens eine Spezies, ausgewählt aus Polyesterharzen, die von Polybutylenterephthalatharz verschieden sind, in einem Gewichtsverhältnis von 90/10 bis 40/60 umfaßt.

5. Polyesterharzzusammensetzung zum Spritzgießen, wie in den Ansprüchen 1 bis 4 beschrieben, umfassend ein Polybutylenterephthalatharz und ein Poly(ethylenterephthalat)harz als das Polyesterharz (A).

6. Polyesterharzzusammensetzung zum Spritzgießen, wie in einem der Ansprüche 1 bis 5 beschrieben, wobei das Zirkoniumsilikat (B) eine durchschnittliche primäre Teilchengröße von 5 µm oder kleiner aufweist.

7. Polyesterharzzusammensetzung zum Spritzgießen, wie in einem der Ansprüche 1 bis 6 beschrieben, umfassend 0,1 bis 15 Gewichtsteile des Zirkoniumsilikats (B) pro 100 Gewichtsteilen des Polyesterharzes (A).

8. Polyesterharzzusammensetzung zum Spritzgießen, wie in einem der Ansprüche 1 bis 7 beschrieben, wobei der Gehalt einer Fraktion des Zirkoniumsilikats (B) mit einer Teilchengröße, überschreitend das Fünffache so groß wie die durchschnittliche primäre Teilchengröße, 2 Gew.-% oder weniger, relativ zu dem Gesamtgehalt an Zirkoniumsilikat, beträgt.

9. Polyesterharzzusammensetzung zum Spritzgießen, wie in einem der Ansprüche 1 bis 8 beschrieben, umfassend mindestens eine Spezies, ausgewählt aus Hydrazin-Derivaten und Organo-Phosphorverbindungen, als das Chelatisierungsmittel (C), welches befähigt ist, ein Chelat mit ein- bis vierwertigen Metallionen zu bilden.

10. Polyesterharzzusammensetzung zum Spritzgießen, wie in einem der Ansprüche 1 bis 8 beschrieben, umfassend mindestens eine Spezies, ausgewählt aus Hydrazin-Derivaten, als das Chelatisierungsmittel (C), welches befähigt ist, ein Chelat mit ein- bis vierwertigen Metallionen zu bilden.

11. Polyesterharzzusammensetzung zum Spritzgießen, wie in einem der Ansprüche 1 bis 8 beschrieben, umfassend mindestens eine Spezies, ausgewählt aus Hydrazin-Derivaten mit einem Molekulargewicht von 300 bis 1000, als das Chelatisierungsmittel (C), welches befähigt ist, ein Chelat mit ein- bis vierwertigen Metallionen zu bilden.

12. Polyesterharzzusammensetzung zum Spritzgießen, wie in einem der Ansprüche 1 bis 11 beschrieben, umfassend 0,05 bis 1 Gewichtsteile des Chelatisierungsmittels (C), welches befähigt ist, ein Chelat mit ein- bis vierwertigen Metallionen zu bilden, pro 100 Gewichtsteilen des Polyesterharzes (A).

13. Lichtreflektorbasis, gebildet aus der Polyesterharzzusammensetzung zum Spritzgießen, wie in einem der Ansprüche 1 bis 12 beschrieben.

14. Lichtreflektor mit einer Licht-reflektierenden Schicht auf der Lichtreflektorbasis, wie in Anspruch 13 beschrieben.

15. Lichtreflektor, wie in Anspruch 14 beschrieben, wobei die Licht-reflektierende Schicht eine Metallfolie ist und die Metallfolie in Kontakt mit der Oberfläche der Lichtreflektorbasis ist.

## Revendications

1. Composition de résine poly(ester) pour le moulage par injection comprenant :
(A) 100 parties en poids d'une résine poly(ester), qui est un poly(téréphtalate d'alkylène) ;
(B) 0,1 à 20 parties en poids de silicate de zirconium ayant une taille moyenne de particule primaire de 10 µm ou moins ; et
(C) 0 à 5 parties en poids d'un agent chélatant capable de former un chélate avec des ions métalliques mono- à tétravalents.

2. Composition de résine poly(ester) pour le moulage par injection selon la revendication 1, comprenant en outre 0,05 à 5 parties en poids, par rapport à 100 parties en poids de la résine, d'un agent chélatant capable de former un chélate avec des ions métalliques mono- à tétravalents.

3. Composition de résine poly(ester) pour le moulage par injection selon la revendication 1 ou 2, comprenant une résine poly(téréphtalate de butylène) en tant que la résine poly(ester) (A).

4. Composition de résine poly(ester) pour le moulage par injection selon la revendication 1, dans laquelle la résine poly(ester) (A) comprend une résine poly(téréphtalate de butylène) et au moins une espèce choisie parmi des résines poly(ester) autres qu'une résine poly(téréphtalate de butylène), dans un rapport en poids de 90/10 à 40/60.

5. Composition de résine poly(ester) pour le moulage par injection selon les revendications 1 à 4, comprenant une résine poly(téréphtalate de butylène) et une résine poly(téréphtalate d'éthylène), en tant que la résine poly(ester) (A).

6. Composition de résine poly(ester) pour le moulage par injection selon l'une quelconque des revendications 1 à 5, dans laquelle le silicate de zirconium (B) a une taille moyenne de particule primaire de 5 µm ou moins.

7. Composition de résine poly(ester) pour le moulage par injection selon les revendications 1 à 6, comprenant 0,1 à 15 parties en poids du silicate de zirconium (B), pour 100 parties en poids de la résine poly(ester) (A).

8. Composition de résine poly(ester) pour le moulage par injection selon l'une quelconque des revendications 1 à 7, dans laquelle la teneur en une fraction du silicate de zirconium (B), ayant une taille de particule de plus de 5 fois supérieure à la taille moyenne de particule primaire, est de 2 % en poids ou moins par rapport à la teneur totale en silicate de zirconium.

9. Composition de résine poly(ester) pour le moulage par injection selon les revendications 1 à 8, comprenant au moins une espèce choisie parmi des dérivés d'hydrazine et des composés organo-phosphorés, en tant que l'agent chélatant (C) capable de former un chélate avec des ions métalliques mono- à tétravalents.

10. Composition de résine poly(ester) pour le moulage par injection selon l'une quelconque des revendications 1 à 8, comprenant au moins une espèce choisie parmi des dérivés d'hydrazine, en tant que l'agent chélatant (C) capable de former un chélate avec des ions métalliques mono- à tétravalents.

11. Composition de résine poly(ester) pour le moulage par injection selon les revendications 1 à 8, comprenant au moins une espèce choisie parmi les dérivés d'hydrazine ayant une masse moléculaire de 300 à 1 000, en tant que l'agent chélatant (C) capable de former un chélate avec des ions métalliques mono- à tétravalents.

12. Composition de résine poly(ester) pour le moulage par injection selon l'une quelconque des revendications 1 à 11, comprenant 0,05 à 1 partie en poids de l'agent chélatant (C) capable de former un chélate avec des ions métalliques mono- à tétravalents, pour 100 parties en poids de la résine poly(ester) (A).

13. Base de réflecteur de lumière formée à partir de la composition de résine poly(ester) pour le moulage par injection selon l'une quelconque des revendications 1 à 12.

14. Réflecteur de lumière ayant une couche réflectrice de lumière sur la base de réflecteur de lumière selon la revendication 13.

15. Réflecteur de lumière selon la revendication 14, dans lequel la couche réflectrice de lumière est un film métallique, et le film métallique est en contact avec la surface de la base de réflecteur de lumière.
